# EUROPEAN PATENT APPLICATION

(11) **EP 0 870 790 A1**
(43) Date of publication of application: **14.10.1998**
(21) Application number: 95927973.8
(22) Date of filing: 04.08.1995
(51) Int. Cl.: C08G 59/50, C08G 59/40, C08L 63/00

(54) **CURABLE EPOXY RESIN COMPOSITION**

(71) Applicant: ASAHI DENKA KOGYO KABUSHIKI KAISHA, Arakawa-ku Tokyo 116 (JP); CECA S.A., 92800 Puteaux (FR)
(72) Inventor: HIOKI, Akira Asahi Denka Kogyo Kabushiki Kaisha, Tokyo 116 (JP); MORIO, Kazuhiko Asahi Denka Kogyo Kabushiki Kaisha, Arakawa-ku Tokyo 116 (JP); KAWAMURA, Tetsushi, Tokyo 164 (JP)
(74) Representative: Haicour, Philippe
(86) International application number: JP9501557
(87) International publication number: WO9706199

(57) **Abstract**

Curable epoxy resin composition comprising (a) epoxy resin (A), (b) curing agent (B) for the epoxy resin, selected from the group consisting of amine compound (B-1) and its denatured products (B-2) and polythiol compound (B-3), (c) absorbent or adsorbent (C), and optionally (d) catalyst (D) for accelerating a reaction between epoxy group and mercapto group, which is used optionally when the amine compound (B-1) and its denatured products (B-2) is not used as the curing agent (B). The composition can contain absorbent or adsorbent (C) a proportion of 10 to 200 parts by weight with respect to 100 parts by weight of the epoxy resin (A) to produce absorptive-adsorptive cured article.

## Description

### Field of Invention

This invention relates to a curable epoxy resin composition having absorptive or adsorptive property, more particularly to an absorptive or adsorptive epoxy resin composition which is curable at ambient temperature to produce a cured product which can be used as coating material, sealant, adhesive and in other applications.

### Background of the Invention

Epoxy resin is widely used in paint, adhesive, electrical parts, civil engineering and construction. Cured products obtained by curing typical bisphenol A type epoxy resins with polyamine possess nearly no absorbability or adsorption property.

No absorbability or no adsorbability is a common property of usual thermoplastic resins and thermosetting resins which is thought to be an advantageous property in many applications including usual paints, electric parts and materials for civil engineering and construction. However, no or poor absorbability or no adsorbability becomes a cause of dewfall on resin surface in a closed air tight space under high humidity. In other words, there are certain applications where absorbability and/or desorbablilty is required such as materials for interior and vehicles, material for containers of transportation and warehouses. Another problem of such closed air tight space is odor or bad smell, so that it is also required to develop odor-adsorptive material. Other materials which are required to be developed is those possessing a function to control humidity in atmosphere in such a manner that absorbed humidity is released when air become dry or a function to release perfume or the like under controlled condition.

A variety materials of thermoplastic resin containing adsorbent ans/or absorbent are known. Known materials, however, are prefabricated in a form of film, sheet, plate, rod or the like but can not be coated in situ. In fact, it is desired to develop a curable composition which can be coated in situ on a surface of plastic material which possesses no absorptive or adsorptive property and which can be used as coating material, sealant, adhesive or the like.

An object of the present invention is to provide an absorptive or adsorptive epoxy resin composition which is curable at ambient temperature to produce a cured product which can be used as coating material, sealant, adhesive and in other applications.

### Disclosure of the Invention

The present invention provides a curable epoxy resin composition comprising
a) epoxy resin (A),
b) curing agent (B) for the epoxy resin, selected from the group consisting of amine compound (B-1) and its denatured products (B-2) and polythiol compound (B-3),
c) absorbent or adsorbent (C), and optionally
d) catalyst (D) for accelerating a reaction between epoxy group and mercapto group, which is used optionally when the amine compound (B-1) and its denatured products (B-2) is not used as the curing agent (B).

### Brief Description of Drawings

Fig. 1 shows the results of Examples 1 to 3 and comparative example 1, showing weight change after dried samples were immersed in deionized water at ambient temperature.

Fig. 2 is a graph similar to Fig. 1, showing the results of Examples 4 and 5.

### The best mode of the Invention

Epoxy resin (A) may be known epoxy resins used in pains, adhesive and sealant and possess, in its molecule, more than one (in average) substituted or unsubstituted glycidyl group represented by the general formula: 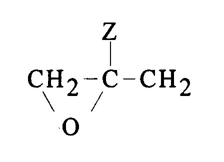 in which Z is hydrogen atom or alkyl group such as methyl and ethyl.

Examples of the epoxy resin (A) are epoxy resins having more than one glycidyl ether, glycidyl ester, glycidyl amine or glycidyl imine in average in its molecule.

Epoxy resins (A-1) having more than one glycidyl ether in average in its molecule may be following resins:
- (A-1-1): polyglycidyl ethers of polyalcohol such as ethylene glycol, propylene glycol, butane diol, glycerol and trimethylol propane.
- (A-1-2): polyglycidyl ethers of monocyclo-polyphenols such as resorcinol, hydroquinone, pyrocatechol, phloroglucinol, 1, 5-dihydroxy naphtharene, 2, 7-dihydroxy naphtharene and 2, 6-dihydroxy naphtharene.
- (A-1-3): polyglycidyl ethers of polycyclo-diphenols including bis-(hydroxyphenyl) alkanes such as 2, 2-bis(4-hydroxyphenyl)-propane, 2, 4'-dihydroxydiphenyl methane, bis-(2-hydroxyphenyl)-methane, bis-(4-hydroxyphenyl)-methane, bis-(4-hydroxy-2, 6-dimethyl-3-methoxyphenyl)-methane, 1, 1-bis-(4-hydroxyphenyl)-ethane, 1, 2-bis-(4-hydroxyphenyl)-ethane, 1, 1-bis-(4-hydroxy-2-chlorophenyl)-ethane, 1, 1-bis-(3, 5-dimethyl-4-hydroxyphenyl)-ethane, 1, 3-bis-(3-methyl-4-hydroxyphenyl)-propane, 2, 2-bis-(3, 5-dichloro-4-hydroxy phenyl)-propane, 2, 2-bis-(3-phenyl-4-hydroxyphenyl)-propane, 2, 2-bis-(3-isopropyl-4-hydroxyphenyl)-propane, 2, 2-bis-(2-isopropyl-4-hydroxy phenyl)-propane, 2, 2-bis-(4-hydroxynaphthyl)-propane, 2, 2-bis-(4-hydroxyphenyl)-pentane, 3, 3-bis-(4-hydroxyphenyl)-pentane, 2, 2-bis-(4-hydroxyphenyl)-heptane, bis-(4-hydroxyphenyl)-methane, 1, 2-bis-(4-hydroxyphenyl)- 1, 2-bis-(phenyl)-propane and 2, 2-bis-(4-hydroxyphenyl)-1-(phenyl)-propane; dihydroxyphenyl biphenyls such as 4, 4'-dihydroxybiphenyl and 2, 2'-dihydroxy biphenyl, 2, 4'-dihydroxy biphenyl; di-(hydroxyphenyl) sulfones such as bis-(4-hydroxyphenyl) , 2, 4'-dihydroxydiphenyl sulfone, chloro-2, 4-dihydroxydiphenyl sulfone, 5-chloro-2, 4-dihydroxydiphenyl sulfone, 5-chloro-4, 4'-dihydroxydiphenyl sulfone and 3'-chloro-4, 4'-dihydroxydiphenyl sulfone; di-(hydroxyphenyl) ethers such as bis-(4-hydroxyphenyl) ether, 4, 3- (or 4, 2'- or 2, 2'-) dihydroxydiphenyl ether, 4, 4'-dihydroxy-2, 6-dimethyldiphenyl ether, bis-(4-hydroxy-3-iso-propylphenyl) ether, bis-(4-hydroxy-3-chlorophenyl) ether, bis-(4-hydroxy-3-fluorophenyl) ether, bis-(4-hydroxy-3-bromophenyl) ether, bis-(4-hydroxynaphthyl) ether, bis-(4-hydroxy-3-chloro naphthyl) ether, bis-(2-hydroxybiphenyl) ether, 4, 4'-dihydroxy-2, 6-dimethoxydipheny ether and 4, 4'-dihydroxy-2, 5-diethoxydipheny ether; 1, 1-bis-(4-hydroxypheny)-2-phenyl ethane; 1, 3, 3-trimethyl-1-(4-hydroxypheny)-6-hydroxy indane and 2, 6-bis-(4-hydroxypheny)-4-methyl pentane,
- (A-1-4): other polyglycidyl ethers of polycyclo-diphenols including 1, 4-bis-(4-hydroxybenzyl)-benzene, 1, 4-bis-(4-hydroxybenzyl) -tetramethylbenzene, 1, 4-bis-(4-hydroxybenzyl)-tetraethyl benzene and 1, 4-bis-(4-hydroxychlomyl)-tetraethylbenzene,
- (A-1-5): polyglycidyl ethers of polycyclo-polyphenols including precondensates between phenols and carbonyl compounds such as precondensate of phenol resin, phenol-acrolein polycondensation reaction product, phenol-glyoxal polycondensation reaction product, phenol-pentane diallyl polycondensation reaction product, resorcinol-acetone polycondensation reaction product and xylene-phenol-formalin polycondensation reaction product and precondensates between phenols and polychlroromethylated aromatic compounds, and
- (A-1-6): polyglycidyl ethers obtained by adding alkylene oxide such as ethylene oxide, propylene oxide an butyl oxide to the above-mentioned polyalcohols, monocyclo-polyphenols, polycyclo-diphenols or polycyclo-polyphenols and then by changing hydoxyl groups to glycidyl ether groups.

Epoxy resins (A-2) having more than one glycidyl ester in average in its molecule may be homopolymer and coploymers of polyglycidyl esters of aliphatic polycarboxylic acids and aromatic carboxylic acids or of acrylic acids.

Epoxy resins (A-3) having more than one glycidyl amine or glycidyl imine in average in its molecule may be polyglycidyl compounds obtained by changing amine groups in precondensates of aniline or aromatic amine having alkyl substitute on benzene ring or in precondensates of aromatic aniline, aldehyde and phenol to glycidyl amino group or glycidyl imido group.

Among these epoxy resins, preferred ones are polyglycidyl ethers of polycyclo-diphenols (A-1-3) and polyglycidyl ethers obtained by adding alkylene oxide such as ethylene oxide, propylene oxide an butyl oxide to polycyclo-diphenol for example and then by changing hydoxyl groups to glycidyl ether groups (A-1-6), and more preferable epoxy resin is polyglycidyl ether of bis-(hydroxyphenyl)-alkane mentioned in the polyglycidyl ethers of polycyclo-diphenols (A-1-3).

The epoxy resin is use alone or in combination of more than two epoxy resins, or can be combined with other compatible resin(s) such as denatured epoxy resins denatured with synthetic rubber, urethane, polysulfide or phosphoric acid or having chelating groups; thermosetting resins such as unsaturated polyester, phenoxy resins, phenol resin and xylene resin; ethylene-vinyl acetate copolymer; thiocol resin; coal-oil resins; denatured butadine-acrylonitrile resin and vinyl acetate resin.

The composition according to the present invention can contains diluent for epoxy resin. The diluent may be reactive diluents including monoepoxy compound such as olefin oxide, glycidylmethacrylate, octylene oxide, olefin oxide, glycidylmethacrylate, octylene oxide, allylglycidyl ether, butylglycidyl ether, 2-ethylhexylglycidyl ether, vinylcyclohexene monoxide, styrene oxide, phenylglycidyl ether, p-sec-butylphenolglycidyl ether, cresylglycidyl ether and α-pinene oxide; and di- or polyepoxy compounds such as butadiene oxide, dimethyl pentane oxide, diglycidyl ether, butanediolglycidyl ether, ethyleneglycol didlycidyl ether, di- or polyethylene glycol diglycidyl ether, propyleneglycidyl ether, di- or poly-propyleneglycoldiglycidyl ether, vinyl cyclohexene dioxide, neopentylglycoldigrycidyl ether, diglycidyl aniline, trimethylolpropanetriglycidyl diether, glycerine triglycidyl ether, limonene dioxide, resorcine diglycidyl ether, 2, 6-diglycidylphenylglycidyl ether, 2, 4-diglycidylphenylglycidyl ether and 2-diglycidylphenylglycidyl ether, and non-reactive diluents such as dibutylphthalate, glycol ether-ester, styrene and phenols.

The curing agent (B) for epoxy resin is selected from the group consisting of of amine compound (B-1) and its denatured products (B-2) and polythiol compound (B-3).

The amine compound (B-1) may be aliphatic diamines such as ethylene diamine, trimethylene diamine tetramethylene diamine, hexamethylene diamine, octamethylene diamine, nonamethylene diamine, decamethylene diamine, undeca diamine, 2-methyl-2, 4-diaminopentane and H₂N(CH₂)ₙ-CH(CH₃)NH₂ (n = an integer of 1 to 8); alkylene polyamines such as diethylene triamine, triethylene tritetramine, tetraethylene pentamine, hexametylene heptamine, di(hexamethyl) triamine, tri(hexamethylene) tetramine, tetra(hexamethylene) pentamine, tripropylene tetramine, tertapropylene pentamine, iminobispropyl amine, methyliminobispropyl amine, tetra(aminomethyl)methane, tetrakis(2-aminoethylaminomethyl) methane, triethylene-bis(trimethylene)hexamine; aliphatic diamines having aromatic ring structure such as 1, 3-diaminomethylnaphthalene, 1, 4-diaminomethylnaphthalene, 4, 4'-diaminomethylbiphenyl and o-, m- or p-xylylenediamine (ω, ω'-diaminoxylene); aliphatic diamines having cycloaliphatic structure such as 1, 3-diaminocyclopentane, 1, 4-diaminocyclohexane, 1-cyclohexylamino-3-aminopropane, 1, 3-aminocyclohexane, 1, 2-diaminocyclohexane, 1-amino-3-3-aminomethyl-3, 5, 5-trimethylcyclohexane(isophoronediamine), 1, 8-diamino-8-methane, bis-(4-aminocyclohexyl) methane, di(amino cyclohexyl) sulfone, 2, 2'-bis-(4-aminocyclohexyl) propane, 1, 3-di-(amniocyclohexyl) propane, 1, 3-bis-(aminomethyl)cyclohexane, 1, 2-bis-(aminomethyl)cyclohexane, 4-isopropyl-1, 2-diaminocyclohexane, 2, 4-diaminocyclohexane, N, N'-diethyl-1, 4-diaminocyclohexane, 3, 3'-dimethyl-4, 4'-diaminodicyclohexyl methane and 3-aminomethyl-3, 3, 5-trimethylcyclohexyl methane; aliphatic amines having heterocycloaliphatic structure such as N-aminoethyl peperazine, 1, 4-bis-(3-aminopropyl) piperazine and 3, 9-bis-(3-aminopropyl)-2, 4, 8, 10-tetraoxaspiro [5, 5] undecane; and aromatic amines such as metaphenylene diamine, o-phenylene diamine, 2, 4-toluene diamine, 4-chloro-o-phenylene diamine, metaamninobenzyl amine, 4-methoxy-6-methyl-metaphenylene diamine, benzidine, 4, 4'-diaminodiphenyl methane, 2, 4, 6-tri(dimethylaminomethyl) phenol, 2, 2-bis(4-aminophenyl) propane, 4, 4'-diaminodiphenyl ether, 4, 4'-diaminodiphenyl sulfone, bis(3, 4-diaminophenyl) sulfone, diamino trisulfone, 4, 4'-diaminobenzophenone, 2, 2'-dimethyl-4, 4'-diaminodiphenyl methane, 2, 4'-diaminodiphenyl, 3, 3'-dimethyl-4, 4'-diaminobiphenyl and 3, 3'-dimethoxy-4, 4'-diaminobiphenyl.

As the amine compound (B-1), following compound also can be used:
- 3, 9-bis(3-aminopropyl)-2, 4, 8, 10-tetraspiro [5, 5] undecane (ATU). ATU is a diamine (m p = 47 to 48 °C, activated hydrogen equivalent = 68.6) having spiro rings in it molecule and represented by following structure: 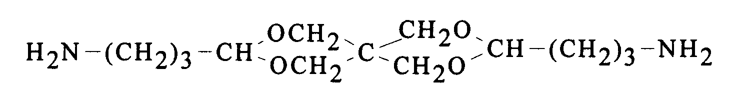 Available on market (trade name : EPOMATE) in a form of denatured liquid curing agent,
- derivatives of ATU, epoxy addition compounds and acrylonitrile addition products,
- diamine having a hydantoin ring represented by following structure: 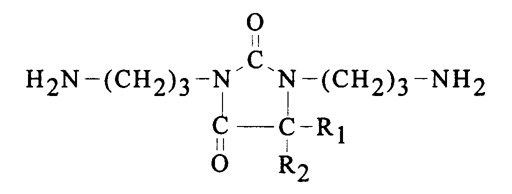 in which R₁, R₂ are hydrogen atom or lower alkyl.
- di- or tri-amine having ether bond in its main chain, including following diamine of polyoxypropylene chain: 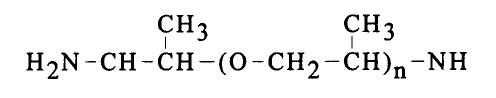 available on market as polyether diamine D-230, D-400, D-200 from Mitsui-Texaco Co., Ltd. (number of D corresponds to molecular number), available on market as polyether diamine D-230, D-400, D-200 from Mitsui-Texaco Co., Ltd., and triamine: 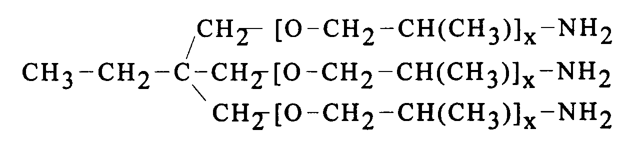 available on market as T-403, and the other diamines of polyoxyethylene chain :ED-600, ED-900, ED-2,000,
- potential curing agents such as dicyandiamide, guanidine, carbonate hydrazido, imidazole and its derivatives.

The denatured products (C-2) can be prepared by denaturing the above-mentioned amines by following techniques:
1) Mannich reaction with phenols and carbonyl compound,
2) addition reaction with epoxy compound,
3) Michael addition reaction with substituted or unsubstituted acryl compound,
4) polyamidation with polycarboxylic acid, and
5) ketimination with ketone compound.
   A mixture of denatured products also can be used

Phenols used in Mannich reaction 1) are typically phenol, alkyl-substituted phenol, cresol, halogenated phenol, anisole, bisphenol-A, bisphenol-F and their mixtures and carbonyl compounds used in Mannich reaction are typically formaldehyde, paraformaldehyde, acetoaldehyde, benzaldehyde, acetone and their mixtures but other phenols and carbonyl compounds also can be used.

Epoxy compound used in the denaturing method 2) may be those mentioned in the epoxy resin (A) and.the diluents for epoxy resins.

The substituted or unsubstituted acryl compound used in the Michael addition reaction 3) is typically (meth)acrylic acid, acrylonitrile, acrylamide and (meth)acrylates but other compounds also can be used.

Polycarboxylic acid used in polyamidation 4) may be but not exclusive to monomer acids, dimer acids, trimer acids, tall oil aliphatic acids, phthalic acid and maleic acid.

The polythiol compound (B-3) as curing agent (B) is those having at least two mercapto (-SH) groups and is preferably selected from following groups:
- (B-3-1): ester between organic carboxylic acid (B-3-1-1) having at least one mercapto group and polyhydroxyl compound (B-3-1-2). The carboxylic acid (B-3-1-1) may be those having one mercapto group such as mercapto acetic acid, β-mercaptopropionic acid, o-mercaptobenzoic acid and thioglycolic acid and those having at least two mercapto groups. The polyhydroxyl compound (B-3-1-2) may be ethyleneglycol, diethyleneglycol, poly(oxyethylene)glycol, propyleneglycol, poly(oxypropylene)glycol, polyoxyethylene-polyoxypropylene glycol, propane-1, 3-diol, butane-1, 4-diol, polyoxybutylene glycol, pentane- 1, 5-diol, hexane- 1, 6-diol, hexane-2, 4, 6-triol, hexane- 1, 2, 6-triol, hexane- 1, 2, 5-triol, glycerol, 1, 1, 1-trimethylolpropane, pentaerythritol, poly(epichlorohydrin), Sorbit, Mannit, polyoxyalkylenepolyols obtained by adding alkyleneoxide such as ethylene oxide and.or propylene oxide to above-mentioned alcohols.
- (B-3-2): ester between hydroxyl compound (B-3-2-1) having more than one mercapto group and polycarboxylic acid (B-3-2-2). The hydroxyl compound (B-3-2-1) may be those having one mercapto group such 2-mercaptoethanol, 1 -mercapto-2-propanol, 2-mercaptoisopropanol, 3-mercapto propanol, 4-mercaptobutanol, 3-mercapto-1, 2-propanediol, 1-phenyl-2-mercaptoethanol and o-mercaptophenol and those having more than one mercapto groups and the polycarboxylic acid (B-3-2-2) may be maleic acid, malonic acid, succinic acid, adipic acid, methyl succinic acid, butane-1, 2, 3-tricarboxylic acid, butane tetracarboxylic acid, fumaric acid, itaconic acid, alkenyl-substituted succinic acid, maleic fatty acid, isophthalic acid, terephthalic acid, trimellitic acid and benzene tricarboxylic acid.
- (B-3-3): polythiol compound obtained by a reaction between polyepoxy compound (B-3-3-1) and hydrogen sulfide or polythiol (B-3-3-2). The polyepoxy compound (B-3-3-1) may be polyepoxy compounds mentioned in the epoxy resin and.in diluents for epoxy resins which will be explained later and the polythiol (B-3-3-2) may be any one which is mentioned in this specification.
- (B-3-4): polyothiol compound obtained by a reaction between polyhydroxyl compound (B-3-4-1) and epichlorohydrin. The polyhydroxyl compound (B-3-4-1) may be those mentioned in (B-3-1-2).
- (B-3-5): other polythiol compounds including dithioterephthalic acid, 2, 2'-dimercarptodiethyl ether, liquid polysulfone resins, polyoxy alkylenepolyols and polythiol compounds obtained by a reaction between bis(dichloroethyl)formal.

The catalyst (D) for accelerating a reaction between epoxy group and mercapto group is not indispensable when amine compound (B-1) is used as the curing agent (B) for epoxy but is indispensable when polythiol compound (B-3) is used as the curing agent (B) for epoxy.

The catalyst (D) may be, in addition to amine compounds used as the curing agent (B) for epoxy resin, amine compounds including di-n-butylamine, N-methylcyclohexylamine, piperidine, α-picoline, dimethylamino methylphenol, dimethylamino-p-cresol, N, N'-dimethyl ethylenediamine, bis(4-methylaminocyclohexyl)methane, piperazine, trimethylamine, tripropylamine, dimethylbutylamine, dimethylpentyl amine, dimethylcyclohexylamine, tri-n-butylamine, tricyclohexylamine, triethanol amine, dimethylbonzylamine, pyridine, N, N, N', N'-tetrakis(2-cyanoethyl)ethylenediamine, bis(4-dimethylaminocyclohexyl) methane, 2-(dimethylaminomethyl)phenol, 2, 4, 6-tris(dimethylamino methyl) phenol, N, N-dimethylpropane-1, 3-diamine, 4-aminopyridine, 2-methylimidazole, 2-ethyl-4-methylimidazole, 2-undecylimidazole, 2-phenylimidazole, 1-benzyl-2-methylimidazole, 1-cyanoethyl-2-methyl imidazole, 1-cyanoethyl-2-ethyl-4-methylimidazole, N-methyl piperazine, N, N, N'-trimethylethylenediamine, N-(2-aminoethyl) piperazine, N, N'-dimethylpiperazine, 1, 4-diazacyclo(2, 2, 2)octane and pyridine.

Proportion of the curing agent (B) in the composition is preferably selected in such a range that activated hydrogen contained in the curing agent (B) for epoxy resin is 0.5 to 2.0 equivalent, preferably 0.7 to 1.5 equivalent to one epoxy group in the epoxy resin (A). If this proportion becomes lower than the range, curing do not proceed rapidly. On the contrary, if this proportion becomes higher than the range, the product does not show desired flexibility.

Proportion of the catalyst (D) depends to amounts of polythiol compound (B-2) contained in the curable epoxy resin composition and is preferably selected in a range of 0.1 to 10 parts by weight, preferably 1 to 7 parts by weight with respect to 100 parts by weight of epoxy resin.

The absorbent or adsorbent (C) may be activated carbon, activated alumina, silica gel, natural zeolites such as phillipsite, harmotome, merlinoite, gismondine, amicite , garronite, analcime, wairakite, poulingite, laumontite, yugawaralite, chabazite, gmelinite, faujasite, erionite, offretite, levyne, mazzite, natrolite, tetranatrolite, paranatrolite, mesolite, scolesite, thomsonite, gonnardite, edingtonite, mordenite, dachardite, epistilbite, ferrierite, bikitite, heulandite, clinoptilolite, stylbite, stellerite, barrerite, brewsterite, cowlesite, pollesite and ashcrofin; synthetic zeolites such as zeolite A, zeolite NA, zeolite X, zeolite Y and zeolite Q, ZSM-5, zeolite ZK 4, zeolite ZK-5, Z-14US, zeolite B, zeolite Ω, zeolite S, zeolite R, zeolite G, zeolite D, zeolite T, zeolite L, zeolite W and zeolite C; absorption polymer such as polyacrylic acid crosslinked products, hydrolysis products of starch-acrylonitrile graft copolymer, neutralized products of starch-acrylonitile graft polymer, saponified product of acrylate-vinyl acetate copolymer, denatured product of crosslinked polyvinyl alcohol, partly neutralized polyacrylic acid crosslinked product and crosslinked iso-butylene-maleic anhydride copolymer; and activated clay such as montmorillonite, pyrophyllite, bidellite, nontronite and saponite.

The absorbent or adsorbent (C) is preferably a substance having both of absorption powder and adsorption powder. In this sense, activated carbon and zeolite are preferable. Optionally, the absorbent or adsorbent (C) can absorb or adsorb previously any suitable component.

Proportion of the absorbent or adsorbent (C) is preferably 10 to 200 parts, preferably 20 to 100 parts by weight with respect to 100 parts by weight of said epoxy resin (A). If this proportion is not higher than the range, the cured product does not show the property of absorption or adsorption. On the contrary, higher proportion spoil the mechanical strength.

The composition according to the present invention may contain blowing agent (E). Blown articles or foams obtained from curable epoxy resin composition incorporated with the blowing agent show improved absorptive or adsorptive property. The blowing agent (E) may be azo compounds such as azobisisobutylonitrile, azodicarbone diacid, azobisformamine and diazoaminobenzene; notroso compounds such as N, N'-dinitrosopentamethylenetetramine and N, N'-dimethyl-N, N'-dinitrosoterephthalaminde; hydrazido compounds such as benzenesulfonylhydrazido, toluenesulfonylhydrazido, p, p'-oxybis (benzene sulfonylhydrazido); other organic blowing agents such as methylhydridienepolysiloxane; inorganic blowing agents such as sodium hydrogen borate; and microcapsules which expand at high temperature such as low boiling point hydrocarbons capsuled in polyvinylidenechloride. One can also use such substances that produce gas at curing stage or that have boiling points near the curing temperature such as organic solvents including aliphatic hydrocarbons, alcohols, ketones and halogen compounds. Blowing may be effected by carbon dioxide produced by a reaction between polyisocyanate and water.

The composition according to the present invention can contain inorganic fillers usually used in paints, adhesives and sealants. The inorganic fillers may be inorganic oxides such as oxides of titanium, magnesium, zirconium and aluminium; sulfates such as barium sulfate; calcium carbonate, silica, clay and talc.

The composition according to the present invention can contain further the other additives including followings:
1) coloring pigments such as red iron oxide, chrome yellow, yellow iron oxide, titanium white, phthalocyanine Blue and phthalocyanine Green; anti-corrosive pigments such as chromic acid type, morybdic acid type, phosphoric acid type, boric acid type, ferrite type, lead oxides; flake pigments such as glass flake, stainless flake and aluminum flake,
2) fibers or filaments such as asbestos, plant fibers, glass fibers, carbon fibers and synthetic fibers;
3) anti-stain agents such as cuporous oxide, triphenyl tin hydrooxide, bis-tributyl tin-α, α'-diburomosuccinate and other organic anti-stain agents,
4) chelating agents such as ethylenediamine tetraacetic acid,
5) metal powders such as powders of copper, copper alloys, zinc, aluminum and iron,
6) silane coupling agents such as γ-chloropropyltrimethoxysilane, γ-chloropropylmethyldichlorosilane, γ-chloropropylmethyldialoxy silane, vinyl triacetoxysilane, vinyl trialkoxysilane, vinyl(β-methoxy)silane, γ-methacryloxypropyltrimethoxysilane, γ-methacryloxypropylmethylalcoxysilane, γ -mercaptopropyl trimethoxysilane, β-(3, 4-epoxycyclohexyl)ethylrimethoxysilane, γ-glycidoxypropyltrimethoxysilane, γ-glycioxypropylmethyl dialcoxysilane, γ-mercaptopropyltrimethoxysilane, γ-aminopropyltrimethoxysilane, N-phenyl-γ-aminopropyl trimethoxysilane, N-β-(aminoethyl)-γ-aminopropylmethyl dimethoxysilane, γ-(polyethyleneamino)propyltrimethoxy silane, N-β-(aminoethyl)-γ-aminopropyltrimethoxysilane, γ-ureido propyltriethoxysilane, methylaminoethoxypropyldialkoxysilane and N'-vinylbenzyl-N-trimethyoxypropyldiamine salts,
7) the other additives including surfactants which improve dispersion of pigments, anti-sedimentation agent, anti-sagging agent, thicking agent, anti-fungus agent, anti-mold agent, electroconductive filler, fire retardant, plasticizer and stabilizer, defoaming agent.

Amounts of these additives is limited to such levels that they do not spoil the objective property of the composition according to the present invention.

The composition according to the present invention can be prepared by usual mixing technique. For example, the absorbent or adsorbent (C) together with inorganic filler, diluent or the like is mixed firstly with epoxy resin (A) in a dispersing machine such as sand mill, three roll mill to prepare a uniform epoxy mixture (I). On the other hand, the curing agent (B) for epoxy optionally together with the other additives are mixed with epoxy resin (A) to prepare a uniform curing epoxy mixture (II). These two epoxy mixtures (I) and (II) are mixed in a mixer when the composition according to the present invention is used. In a variation, a part of the absorbent or adsorbent (C), inorganic filler, diluent or the like is mixed previously with the curing epoxy mixture (II).

The composition according to the present invention can be used as sealant, coating material, casting material, molding material, dipping material and adhesives. In particularly, the composition possessing absorption-desorption function, deodorant function, controlled releasing function and adsorption-desorption function can be used in a variety of applications such as spacer for multi-layered window planes, interior materials for automobiles, materials for protecting freshness, for reserving perfume, for preventing denaturing of stored substances, for preventing adhesion of water drops, for reserving vegetable and fruits for long term, interior materials for warehouses and depositories, interior materials for vehicles, carriers for special applications (such as anti-fungus agent, anti-mold agent, perfumes, agricultural chemicals, anti-bacterial agent), materials for preventing dewfall, for controlling humidity, materials for walls or decoration, sound- or vibration-damping materials, heat-insulation materials, adsorbent for refrigerators, patient's beds, adsorptive fibers or sheet, materials for packaging or containers and interior materials for transportation containers.

Now, we will explain non limitative Examples of the present invention and Comparative Examples.

### Examples 1 to 3 and Comparative Example 1

Curing agent for epoxy and catalyst were mixed to prepare a curing mixture for epoxy resin which was then mixed with an epoxy resin to prepare epoxy resin compositions summarized in Table 1.

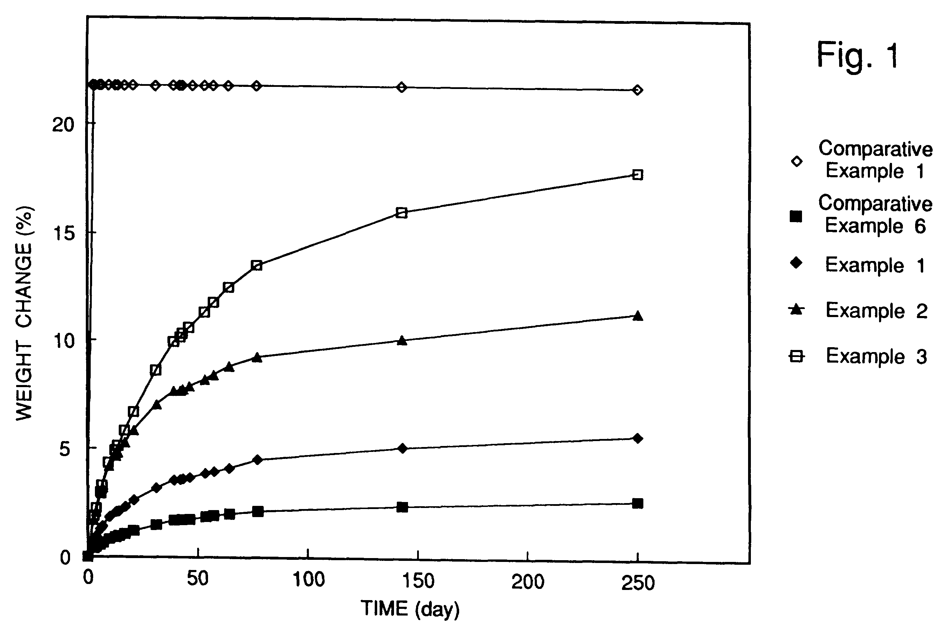

Each resulting epoxy resin composition was cured at ambient temperature to produce a sample plate (50 x 50 x 3 mm). The water absorption was determined as weight change after a dried sample was immersed in deionized water at ambient temperature. The results are shown in Fig. 1.

**Table 1**

| | Example | | | Comparative |
|---|---|---|---|---|
| | 1 | 2 | 3 | 1 |
| epoxy resin (1) | 100 | 100 | 100 | 100 |
| curing agent for epoxy(1) | 50 | 50 | 50 | 50 |
| amine catalyst (1) | 5 | 5 | 5 | 5 |
| absorbent or adsorbent (1) | 20 | 39 | 66 | 0 |
| [note] epoxy resin (1) : bisphenol-F type epoxy resin (product of Asahidenka, EP-4901) curing agent for epoxy (1) : polyamide-amine type (product of Asahidenka, EH-351) amine catalyst (1) : tert amine (product of Asahidenka, EHC-30) absorbent or adsorbent (1) : 4A synthetic zeolite powder | | | | |

### Examples 4 to 5

Example 1 to 3 were repeated but components used were changed to those summarized in Table 2.

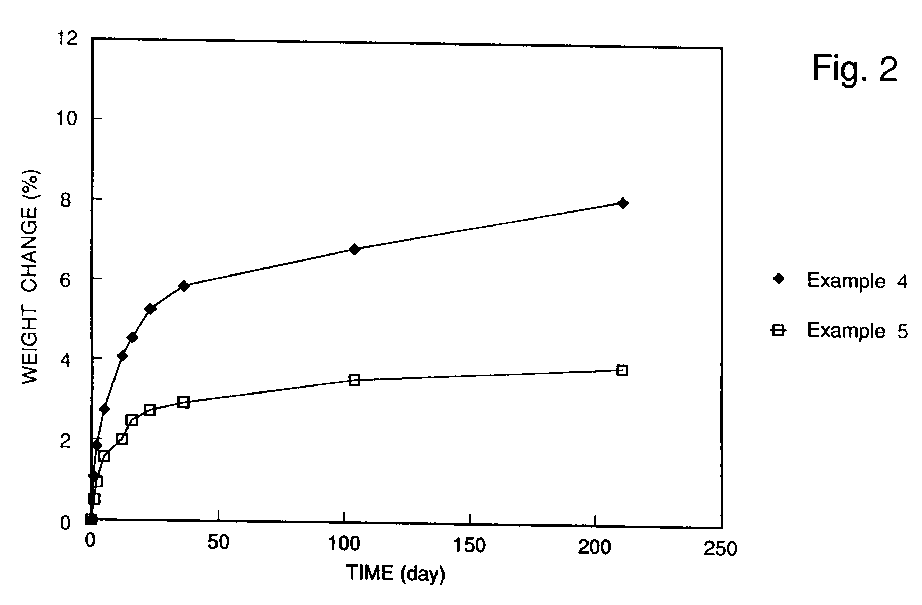

Each resulting epoxy resin composition was cured at ambient temperature to produce a sample plate (50 x 50 x 3 mm). The weight change was determined after a dried sample was immersed in deionized water at ambient temperature. The results are shown in Fig. 2.

**Table 2**

| | | Example | |
|---|---|---|---|
| | | 4 | 5 |
| epoxy resin (1) | | 100 | 100 |
| curing agent for epoxy (1) | | 50 | 50 |
| amine catalyst (1) | | 5 | 5 |
| absorbent or adsorbent | (1) | 20 | 0 |
| | (2) | 0 | 20 |
| blowing agent (1) | | 5 | 0 |
| [note] epoxy resin (1) : = same as Table 1 curing agent for epoxy (1) : = same as Table 1 amine catalyst (1) : = same as Table 1 absorbent or adsorbent (1) : = same as Table 1 (2) : activated carbon powder blowing agent (1): p, p'-oxybis(benzenesulfonylhyrdrazido) | | | |

### Examples 6 to 10 and Comparative Example 2

Example 1 to 3 were repeated but components used were changed to those summarized in Table 3.

Each composition was molded into a sample plate from which water absorbability was evaluated by Japanese Norm JIS K7209 (absorption in water at 23 °C and absorption in boiled water). Water absorption was defined as weight change per unit area (mg/cm²). In the Table 3, the water absorption "A" is a value measured after a dried sample is immersed in boiled water for 30 minutes, while the water absorption "B" is a value measured after a dried sample is immersed in deionized water at 23 °C for 24 hours.

Table 3 reveals improvement in water absorption of epoxy resins containing absorbent. Low water absorption of Example 10 was very poor because this composition fused in the test.

**Table 3**

| | | Examples | | | | | C |
|---|---|---|---|---|---|---|---|
| | | 6 | 7 | 8 | 9 | 10 | 2 |
| epoxy resin (1) | | 100 | 100 | 100 | 100 | 100 | 100 |
| curing agent for epoxy (2) | | 60 | 60 | 60 | 60 | 60 | 60 |
| amine catalyst (1) | | 5 | 5 | 5 | 5 | 5 | 5 |
| absorbent or adsorbent | (1) | 45 | 0 | 0 | 0 | 0 | 0 |
| | (2) | 0 | 20 | 0 | 0 | 0 | 0 |
| | (3) | 0 | 0 | 20 | 0 | 0 | 0 |
| | (4) | 0 | 0 | 0 | 20 | 0 | 0 |
| | (5) | 0 | 0 | 0 | 0 | 20 | 0 |

| water absorption | | | | | | | |
|---|---|---|---|---|---|---|---|
| A (mg/cm²) | | 3.35 | 3.26 | 4.01 | 4.11 | > 208 | 2.49 |
| B (mg/cm²) | | 0.82 | 0.75 | 1.08 | 1.12 | -- | 0.38 |
| C = Comparative Example [note] epoxy resin (1) : = same as Table 1 curing agent for epoxy (2) : polythiol type (product of Asahidenka, EH-3I7) amine catalyst (1) : = same as Table 1 absorbent or adsorbent (1) : = same as Table 1 (2) : = same as Table 1 (3) : silica gel powder (4) : activated alumina powder (5) : water absorption polymer | | | | | | | |

### Examples 11 to 17 and Comparative Example 3

Example 1 to 3 were repeated but components used were changed to compositions summarized in Table 4 from which blown articles were produced.

Heat-insulation property of the resulting blown article was evaluated by the apparent density and the thermal conductivity. Table 4 reveals improvement in these values of compositions according to the present invention.

**Table 4**

| | | Examples | | | | | | | C |
|---|---|---|---|---|---|---|---|---|---|
| | | 11 | 12 | 13 | 14 | 15 | 16 | 17 | 3 |
| epoxy resin (2) | | 100 | 100 | 100 | 100 | 100 | 0 | 0 | 100 |
| epoxy resin (1) | | 0 | 0 | 0 | 0 | 0 | 100 | 100 | 0 |
| curing agent | | | | | | | | | |
| for epoxy (1) | | 50 | 50 | 50 | 50 | 50 | 50 | 50 | 50 |
| amine catalyst | (2) | 5 | 5 | 5 | 5 | 5 | 0 | 0 | 5 |
| | (1) | 0 | 0 | 0 | 0 | 0 | 5 | 5 | 0 |
| absorbent or adsorbent | (1) | 20 | 20 | 20 | 20 | 20 | 0 | 0 | 0 |
| | (2) | 0 | 0 | 0 | 0 | 0 | 20 | 20 | 0 |
| blowing agent (1) | | 0 | 1.7 | 4.4 | 9.0 | 19 | 10 | 0 | 0 |
| apparent density (g/cm3) | | 1.082 | 0.686 | 0.373 | 0.313 | 0.363 | 0.128 | 0.234 | 1.080 |
| thermal conductivity (mg/cm²) | | 0.1214 | 0.0683 | 0.0522 | 0.0470 | 0.0449 | 0.128 | 0.234 | 0.080 |
| C = Comparative Example [note] epoxy resin (1) : = same as Table 1 (2) : bisphenol-A type epoxy resin (product of Asahidenka, EP-4100) curing agent for epoxy (1) : = same as Table 1 amine catalyst (1) : = same as Table 1 (2) N, N'-dimethylaminophenol absorbent or adsorbent (1) : = same as Table 1 (2) : = same as Table 2 blowing agent (1): = same as Table 2 | | | | | | | | | |

### Example 18

100 parts by weight of bisphenol F type epoxy resin (EP-4901, a product of Asahidenka Co., Ltd.), 60 parts by weight of polythiol type epoxy resin (EH-317, a product of Asahidenka Co., Ltd.), 5 parts by weight of tert-amine catalyst (DMP-30, Rhon & Hass) and 20 parts by weight of activated carbon powder were mixed uniformly in a mixer to prepare a composition according to the present invention which was then molded into a sample plate (100 x 100 x 3 mm) for determining odor adsorption power.

The sample plate was put in a bag made of nylon/polyethylene laminated film (a volume = 1,000 ml) having an inlet nozzle and 800 ml of nitrogen gas containing 300 ppm of acetoaldehyde was introduced into the bag through the inlet nozzle. The concentration of acetoaldehyde in the bag was measured after predetermined time duration by gas chromatography to find the results shown in Table 5.

**Table 5**

| time (hr) | 0 | 0.5 | 1 | 2 | 12 |
|---|---|---|---|---|---|
| concentration of acetoaldehyde (ppm) | 280 | 180 | 120 | 55 | 51 |

### Examples 19, 20 and Comparative Example 4

Compositions according to the present invention summarized in Table 6 were each molded into a sample plate (50 x 50 x 3 mm) for evaluating water absorbability.

The sample plates were left in a box interior of which was conditioned at a constant temperature (50 °C) and constant humidity (30 % and 80 %) to determine the water absorbability in term of weight change (mg/cm²) after predetermined time duration.

The results are summarized in Table 6 which reveals improvement in absorbability of compositions according to the present invention containing absorbent or adsorbent at high and low humidities.

**Table 6**

| | | Example | | Compara. |
|---|---|---|---|---|
| | | 19 | 20 | 4 |
| epoxy resin (1) | | 100 | 100 | 100 |
| curing agent for | | | | |
| epoxy (2) | | 60 | 60 | 0 |
| amine catalyst (1) | | 5 | 5 | 5 |
| absorbent or adsorbent | (1) | | | |
| | | 40 | 0 | 0 |
| | (2) | 0 | 20 | 0 |

| weight change (mg/cm²) | | | | |
|---|---|---|---|---|
| 30%, 1 week | | 2.98 | 1.68 | 0.85 |
| 30%, 1 month | | 5.84 | 2.51 | 1.62 |
| 80%, 1 week | | 3.56 | 2.32 | 1.04 |
| 80%, 1 month | | 6.27 | 4.00 | 2.25 |
| [note] epoxy resin (1) : = same as Table 1 curing agent for epoxy (2) : = same as Table 2 amine catalyst (1) : = same as Table 1 absorbent or adsorbent (1) : = same as Table 1 (2) : = same as Table 2 | | | | |

### Industrial applicability

The present invention is to provide an absorptive or adsorptive epoxy resin composition which is curable at ambient temperature to produce a cured product which can be used as coating material, sealant, adhesive and in other applications in which the absorptive or adsorptive property is advantageously utilized.

## Claims

1. Curable epoxy resin composition comprising
a) epoxy resin (A),
b) curing agent (B) for said epoxy resin, selected from the group consisting of amine compound (B-1) and its denatured products (B-2) and polythiol compound (B-3),
c) absorbent or adsorbent (C), and optionally d) catalyst (D) for accelerating a reaction between epoxy group and
mercapto group, which is used optionally when said amine compound (B-1) and its denatured products (B-2) is not used as said curing agent (B).

2. The composition set forth in claim 1 wherein a proportion of said absorbent or adsorbent (C) is 10 to 200 parts by weight with respect to 100 parts by weight of said epoxy resin (A).

3. The composition set forth in claim 1 or 2 further containing blowing agent (E).

4. The composition set forth in any one of claims 1 to 3 wherein said absorbent or adsorbent (C) is a member selected from the group consisting of activated carbon, activated alumina, zeolite, silica gel.and high polymer absorbent.

5. The composition set forth in any one of claims 1 to 3 wherein said absorbent or adsorbent (C) is activated carbon an/or zeolite.

6. The composition set forth in any one of claims 1 to 5 wherein said curing agent (B) is polythiol compound (B-3).

7. The composition set forth in any one of claims 1 to 5 wherein said curing agent (B) for epoxy resin is a polythiol compound selected from the group consisting of
(B-3-1) ester between organic carboxylic acid (B-3-1-1) having at least one mercapto group and polyhydroxyl compound (B-3-1-2),
(B-3-2) ester between hydroxyl compound (B-3-2-1) having more than one mercapto group and polycarboxylic acid (B-3-2-2),
(B-3-3) polythiol compound obtained by a reaction between polyepoxy compound (B-3-3-1) and hydrogen sulfide or polythiol (C-3-3-2),
(B-3-4) polythiol compound obtained by a reaction between polyhydroxyl compound (B-3-4-1) and epichlorohydrin, and
(B-3-5) other polythiol compounds.
